# EUROPÄISCHE PATENTANMELDUNG

(11) **EP 4 706 381 A1**
(43) Veröffentlichungstag der Anmeldung: **11.03.2026**
(21) Anmeldenummer: 25191719.1
(22) Anmeldetag: 25.07.2025
(51) Int. Cl.: A01K 1/00

(54) **PANEL MIT SCHWENKBAREN STANDFÜSSEN**

(30) Priorität: 19.08.2024 DE 202024104675 U
(71) Anmelder: PATURA KG, 63925 Laudenbach (DE)
(72) Erfinder: ALLIÉ, Bernd, 63925 Laudenbach (DE)
(74) Vertreter: Lorenz Seidler Gossel Part. mbB

(57) **Zusammenfassung**

Die vorliegende Erfindung betrifft ein Panel zur Stalleinrichtung, mit einem vorzugsweise rechteckigen Rahmen und einer Mehrzahl von in dem Rahmen angeordneten Streben, wobei das Panel mindestens einen Standfuß aufweist, welcher zwischen einer Stabilisierungsposition, in welcher der Standfuß das Panel im Stand derart stabilisiert, dass das Panel auf dem Standfuß selbstständig frei platzierbar ist, und einer Parkposition reversibel bewegbar ist, in welcher der Standfuß das Panel stützt, das Panel jedoch nicht selbstständig frei platzierbar ist.

## Beschreibung

Die vorliegende Erfindung betrifft ein Panel gemäß dem Oberbegriff des Anspruchs 1.

Panels sind Elemente, z.B. aus geschweißten Stahlrohren, die in der Tierhaltung, beispielsweise Rinder-, Ziegen und Pferdehaltung, zur vorrübergehenden Abgrenzung der Tiere geeignet sind.

Das äußerst geringe Gewicht, die gute Handlichkeit und trotzdem ausreichende Stabilität in Verbindung mit dem günstigen Preis sorgen für eine weite Verbreitung der Gitter. Als Folge werden Panels teilweise auch für eine stationäre Unterbringung von Tieren verwendet.

Grundsätzlich weisen Panels Gitter aus mehreren beispielsweise horizontalen Streben / Rohren auf, die in regelmäßigen Abständen übereinander angeordnet und mittels vertikaler oder horizontaler Streben verschweißt sind. In anderen Worten ist meist ein Rahmen mit Quer- und / oder Vertikalstreben vorgesehen.

Panels bieten gegenüber fest installierten Abtrennungen, wie beispielsweise gemauerten Abgrenzungen, Flexibilität in der Stalleinrichtung. Allerdings geht die gewünschte Flexibilität der Anwendung der Panels noch über das momentan mögliche hinaus und zudem sind herkömmliche Panels oft unhandlich in der Handhabung, wenn sie neu platziert werden sollen. So müssen die recht schweren Panels meist von mehr als einer Person gehoben werden, da sie nicht selbstständig stehen.

Der vorliegenden Erfindung liegt die Aufgabe zugrunde, die Nachteile des Stands der Technik abzumildern oder ganz zu beheben. Konkret liegt der vorliegenden Erfindung die Aufgabe zugrunde, ein Panel bereitzustellen, welches eine flexiblere und leichtere Handhabung ermöglicht.

Diese Aufgabe wird durch ein Panel gemäß Anspruch 1 gelöst. Weitere vorteilhafte Weiterbildungen der Erfindung sind Gegenstand der Unteransprüche.

Demnach ist ein Panel zur Stalleinrichtung vorgesehen, mit einem vorzugsweise rechteckigen Rahmen und einer Mehrzahl von in dem Rahmen angeordneten Vertikalstreben, wobei das Panel mindestens einen Standfuß aufweist, welcher zwischen einer Stabilisierungsposition, in welcher der Standfuß das Panel im Stand derart stabilisiert, dass das Panel auf dem Standfuß selbstständig frei platzierbar ist, und einer Parkposition reversibel bewegbar ist, in welcher der Standfuß das Panel stützt, das Panel jedoch nicht selbstständig frei platzierbar ist.

In anderen Worten erlaubt es der Standfuß in der Stabilisierungsposition, dass das Panel selbstständig steht und somit von nur einer Person umplatziert werden kann. Ist das Panel in der neuen gewünschten Position platziert, so kann der Standfuß in die Parkposition bewegt werden und erweitert somit den Grundriss des Panels nicht unnötig.

Zudem kann das Panel, dessen Standfuß in der Stabilisierungsposition als selbstständige und flexibel platzierbare Absperrung dienen, da das Panel stabil steht und keiner weiteren Elemente zur Abstützung bedarf.

Ist der Standfuß in der Parkposition, kann das Panel platz-und kostensparend ausgeliefert werden und zusammen mit weiteren Bauteilen / Elementen, die das Panel stabilisieren, in der Stalleinrichtung, beispielsweise als Ziegengitter, zum Einsatz kommen.

Für einen besonders stabilen Stand weist das Panel vorzugsweise zwei Standfüße auf, welche vorzugsweise identisch ausgebildet sind und vorzugsweise an zwei einander gegenüberliegenden Enden der untersten Strebe des Rahmens angeordnet sind.

Der mindestens eine Standfuß ist vorzugsweise an dem Rahmen des Panels drehbar und / oder verschwenkbar gelagert.

Der mindestens eine Standfuß kann eine Kufe aufweisen, die vorzugsweise mittels eines Stifts, um welchen die Kufe drehbar und / oder verschwenkbar ist, an dem Rahmen des Panels gelagert ist. Der Stift bildet hierbei vorzugsweise die einzige Verbindung zwischen der Kufe und dem Rahmen.

Vorzugsweise weist die Kufe an zwei gegenüberliegenden Enden jeweils einen hin zu dem Rahmen des Panels gekrümmten Abschnitt, wobei die Endflächen der gegenüberliegenden Enden der Kufe jeweils von dem Rahmen beanstandet sind. Die Kufe kann somit relativ zu dem Rahmen verschwenkt und / oder verdreht werden, ohne, dass die Endflächen der Kufe mit dem Rahmen in Kontakt treten und diesen beschädigen. So kann das Panel besonders verschleißarm ausgebildet werden.

Vorzugsweise sind die gekrümmten Abschnitte identisch ausgebildet und die Kufe ist vorzugsweise symmetrisch.

Weiterhin ist der mindestens eine Standfuß mit vorzugsweise mindestens einem Arretierungsmittel, vorzugsweise in Form eines Gewindes oder einer Schraube, ausgestattet, mittels dessen der Standfuß in der Stabilisierungsposition oder Parkposition lösbar arretierbar ist.

Vorzugsweise ist der Standfuß relativ zu einer durch das Arretierungsmittel verlaufenden gedachten Symmetrieachse symmetrisch ausgestaltet.

Der mindestens eine Standfuß kann dazu ausgelegt sein, durch eine Drehung und / oder Verschwenkung um einen Winkel, vorzugsweise von 90°, aus der Parkposition in die Stabilisierungsposition und zurück gebracht zu werden. Andere Winkel sind denkbar.

Der mindestens eine Standfuß kann um 360° drehbar an dem Rahmen gelagert sein und vorzugsweise in einer beliebigen Position auf der Kreisbahn beispielsweise durch einen Nutzer arretierbar sein.

Der Rahmen und die Vertikalstreben des Panels können aus Metall, insbesondere aus Stahl, gefertigt sein. Der Rahmen und die Vertikalstreben sind vorzugsweise aus miteinander verschweißten Hohlrohren gefertigt.

Weiterhin können bei einem erfindungsgemäßen Panel Verbindungselemente, vorzugsweise in Form von Ketten oder Haken, vorgesehen sein, mittels welcher das Panel mit anderen Panels lösbar verbindbar ist.

Darüber hinaus können bei einem erfindungsgemäßen Panel weiterhin Abschirmelemente vorgesehen sein, mittels welcher Verbindungselemente zum Verbinden mehrerer Panels miteinander und / oder den Verbindungselementen zugehörige Verankerungselemente abgeschirmt werden.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weiterhin können alle hierin beschriebenen Merkmale der Erfindung beliebig miteinander kombiniert oder voneinander isoliert beansprucht werden.

Weitere Einzelheiten und Vorteile der Erfindung werden anhand der in den Zeichnungen dargestellten Ausführungsbeispiele näher erläutert. Gleiche Bezugszeichen bezeichnen gleiche oder ähnliche Bauteile.

Es zeigen:
- Figur 1:: ein erfindungsgemäßes Panel gemäß einer ersten Ausführungsform mit zwei Standfüßen in Parkposition;
- Figur 2:: das Panel aus Fig. 1 mit den Standfüßen in Stabilisierungsposition;
- Figur 3:: eine Detailansicht eines Standfußes aus Fig. 1;
- Figur 4:: ein weiteres erfindungsgemäßes Panel mit zwei Standfüßen in Stabilisierungsposition; und
- Figur 5:: eine Detailansicht eines Abschirmelements aus Fig. 4.

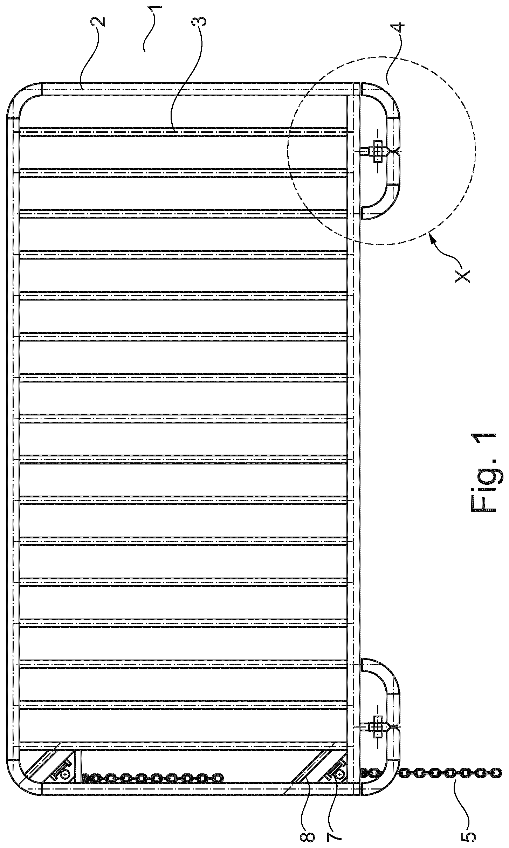

Das in Fig. 1 gezeigte erfindungsgemäße Panel 1 weist einen rechteckigen Rahmen 2 und mehrere in dem Rahmen 2 angeordnete Vertikalstreben 3 auf. Der Abstand der Vertikalstreben 3 zueinander weist durchgängig und einheitlich ca. 10 cm auf. Statt Vertikalstreben können auch Querstreben vorgesehen sein.

Das Panel 1 weist zwei Standelemente bzw. Füße 4 auf, mittels welcher das Panel 1 auf den Boden gestellt werden kann. Die Füße weisen jeweils eine Kufe auf, welche auf den Boden aufgestellt wird. Die Kufe ist jeweils mit einem Stift an dem Rahmen 2 drehbar gelagert.

In der in Fig. 1 gezeigten Ausgestaltung sind die zwei Standfüße 4 jeweils in der Parkposition und die Kufen verlaufen parallel zu den Rahmen 2. Das Panel 1 kann in dieser Stellung platz- und kostensparend versandt werden oder als Abgrenzung zum Einsatz kommen.

Mittels Verbindungselementen, z.B. in Form von Ketten 5, sind einzelne Panels 1 miteinander verbindbar.

Wie in Fig. 1 gezeigt, kann ein erfindungsgemäßes Panel 1 zusätzlich Abschirmungselemente 6 aufweisen, welches verhindert, dass sich Tiere an den möglicherweise scharfkantigen Verbindungselementen verletzen.

Gemäß der in Fig. 1 gezeigten Ausführungsform weisen die Panels1 Ketten 5 und entsprechende Verankerungselemente 7, vorzugsweise in Form von Blechbauteilen oder Dreiecksblechen auf, um einzelne Panels miteinander zu verbinden.

Die Verankerungselemente 7 können sehr scharfkantig sein. Um zu verhindern, dass sich Tiere, die mit ihren Extremitäten zwischen die Vertikalstreben geraten, an den Verankerungselementen 7 verletzten, weist das Panel aus Fig. 1 Abschirmungselemente 6 auf, welche die Verankerungselemente 7 abschirmen und somit die Verletzungsgefahr minimieren.

In der in Fig. 1 gezeigten Ausführungsform sind die Abschirmungselemente 6 als diagonal verlaufende Streben ausgestaltet, welche jeweils parallel zu der die Hypotenuse bildenden Kante der in dieser Ausführungsform als Dreiecksbleche ausgebildeten Verankerungselemente 7 verlaufen.

In der in Fig. 1 gezeigten Ausführungsform sind die Abschirmungselemente 6 und Verbindungselemente bzw. Ketten 5 nur auf einer Seite (links in Fig. 1) des Panels 1 vorgesehen, das Panel 1 kann aber auch beidseitig mit Abschirmungselementen 6 und / oder Verbindungselementen ausgestattet sein.

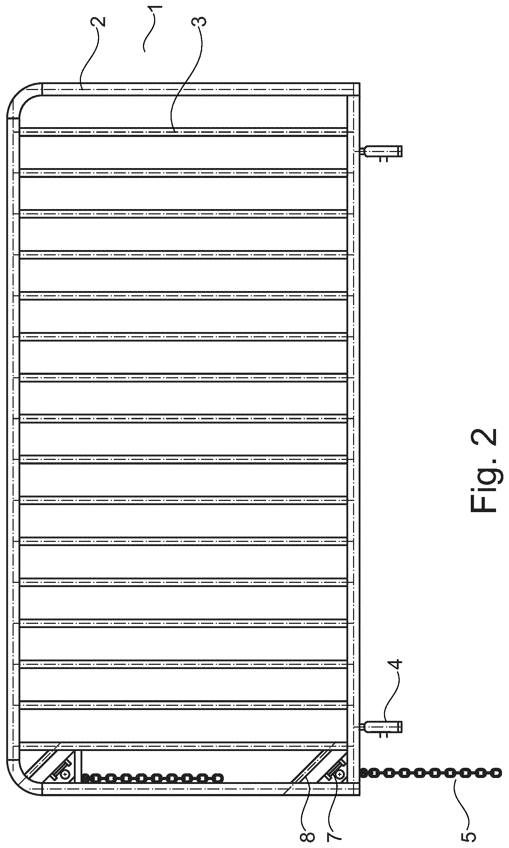

Fig. 2 zeigt das Panel aus Fig. 1 mit den Standfüßen 4 in Stabilisierungsposition. Die Standfüße sind relativ zu der in Fig. 1 gezeigten Parkposition um 90° verdreht und die Kufen sind jeweils in einem Winkel von 90° relativ zu dem Rahmen 2 angeordnet.

Das Panel 1 aus Fig. 2 kann in dieser Stellung frei und selbstständig stehen, es muss vorzugsweise nicht durch ein anderes Bauteil, Element oder Panel stabilisiert werden. Das Panel 1 kann beispielsweise als Barriere dienen.

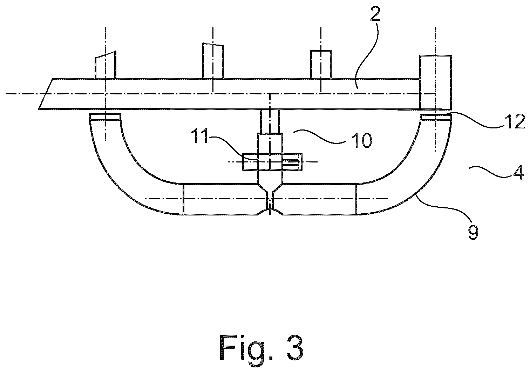

Fig. 3 zeigt eine Detailansicht eines Standfußes aus Fig. 1; in dieser Darstellung sind die Kufe 9, der Stift 10 sowie das Arretierungsmittel 11 gut zu erkennen. Mittels des Arretierungsmittels 11, welches vorzugsweise eine Schraubverbindung umfasst, kann die Kufe 9 relativ zu dem Rahmen 2 in einer gewünschten Position lösbar arretiert werden.

Die Endflächen 12 an den seitlichen Enden der Kufe 9 sind von dem Rahmen 2 beabstandet.

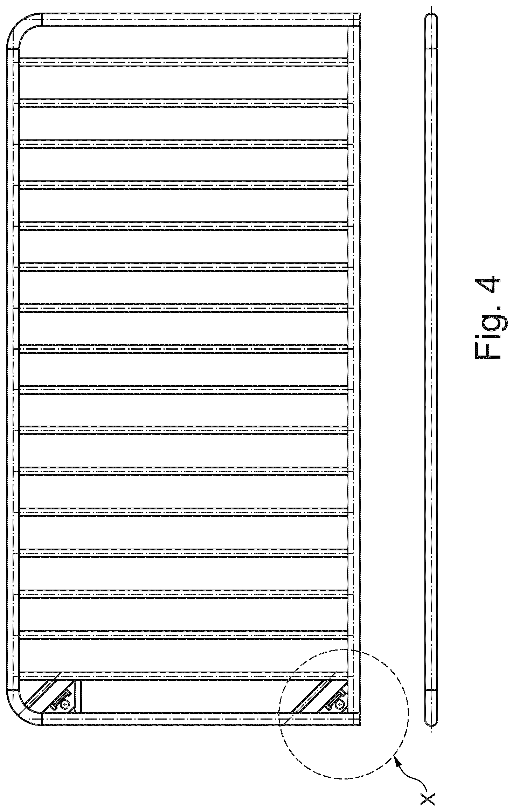

Fig. 4 zeigt ein weiteres erfindungsgemäßes Panel 1 mit zwei Standfüßen 4 in Stabilisierungsposition.

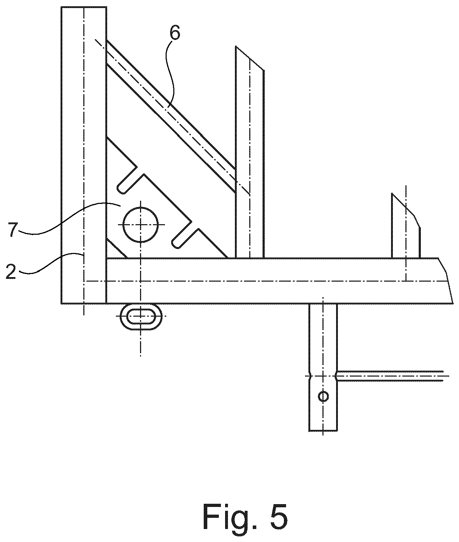

Fig. 5 zeigt ein Verankerungselement 7 und ein Abschirmelement 6 im Detail, bzw. den Ausschnitt X aus der Fig. 4.

In Fig. 5 ist erkennbar, dass in der gezeigten Ausführungsform die Abschirmungselemente 6 als diagonal verlaufende Streben ausgestaltet sind, welche jeweils parallel zu der die Hypotenuse bildenden Kante der in dieser Ausführungsform als Dreiecksbleche bzw. Bleche in Form eines Dreiecks mit fehlender Spitze, ausgebildeten Verankerungselemente 7 verlaufen.

## Patentansprüche

1. Panel zur Stalleinrichtung, mit einem vorzugsweise rechteckigen Rahmen und einer Mehrzahl von in dem Rahmen angeordneten Streben, **dadurch gekennzeichnet, dass** das Panel mindestens einen Standfuß aufweist, welcher zwischen einer Stabilisierungsposition, in welcher der Standfuß das Panel im Stand derart stabilisiert, dass das Panel auf dem Standfuß selbstständig frei platzierbar ist, und einer Parkposition reversibel bewegbar ist, in welcher der Standfuß das Panel stützt, das Panel jedoch nicht selbstständig frei platzierbar ist.

2. Panel gemäß Anspruch 1, **dadurch gekennzeichnet, dass** das Panel zwei Standfüße aufweist, welche vorzugsweise identisch ausgebildet sind.

3. Panel gemäß Anspruch 1 oder 2, **dadurch gekennzeichnet, dass** der mindestens eine Standfuß an dem Rahmen des Panels drehbar und / oder verschwenkbar gelagert ist.

4. Panel gemäß einem der vorhergehenden Ansprüche, **dadurch gekennzeichnet, dass** der mindestens eine Standfuß eine Kufe aufweist, die mittels eines Stifts, um welchen die Kufe drehbar und / oder verschwenkbar ist, an dem Rahmen des Panels gelagert ist.

5. Panel gemäß Anspruch 4, **dadurch gekennzeichnet, dass** die Kufe an zwei gegenüberliegenden Enden jeweils einen hin zu dem Rahmen des Panels gekrümmten Abschnitt aufweist, wobei die Endflächen der gegenüberliegenden Enden der Kufe jeweils von dem Rahmen beanstandet sind.

6. Panel gemäß Anspruch 5, **dadurch gekennzeichnet, dass** die gekrümmten Abschnitte identisch ausgebildet sind.

7. Panel gemäß einem der vorhergehenden Ansprüche, **dadurch gekennzeichnet, dass** der mindestens eine Standfuß mindestens ein Arretierungsmittel, vorzugsweise in Form eines Gewindes oder einer Schraube, aufweist, mittels dessen der Standfuß in der Stabilisierungsposition oder Parkposition arretierbar ist.

8. Panel gemäß Anspruch 7, **dadurch gekennzeichnet, dass** der Standfuß relativ zu einer durch das Arretierungsmittel verlaufenden gedachten Symmetrieachse symmetrisch ausgestaltet ist.

9. Panel gemäß einem der vorhergehenden Ansprüche, **dadurch gekennzeichnet, dass** der mindestens eine Standfuß dazu ausgelegt ist, durch eine Drehung und / oder Verschwenkung um einen Winkel, vorzugsweise von 90°, aus der Parkposition in die Stabilisierungsposition und zurück gebracht zu werden.

10. Panel gemäß einem der vorhergehenden Ansprüche, **dadurch gekennzeichnet, dass** der mindestens eine Standfuß um 360° drehbar an dem Rahmen gelagert ist und vorzugsweise in einer beliebigen Position auf der Kreisbahn arretierbar ist.

11. Panel nach einem der vorhergehenden Ansprüche, **dadurch gekennzeichnet, dass** der Rahmen und die Streben aus Metall, insbesondere aus Stahl, gefertigt sind.

12. Panel nach einem der vorhergehenden Ansprüche, **dadurch gekennzeichnet, dass** weiterhin Verbindungselemente, vorzugsweise in Form von ketten oder Haken, vorgesehen sind, mittels welcher das Panel mit anderen Panels lösbar verbindbar ist.

13. Panel nach einem der vorhergehenden Ansprüche, **dadurch gekennzeichnet, dass** der Rahmen und die Streben aus vorzugsweise miteinander verschweißten Hohlrohren gefertigt sind.

14. Panel nach einem der vorhergehenden Ansprüche, **dadurch gekennzeichnet, dass** weiterhin Abschirmelemente vorgesehen sind, mittels welcher Verbindungselemente zum Verbinden mehrerer Panels miteinander und / oder den Verbindungselementen zugehörige Verankerungselemente abgeschirmt werden.
